# EUROPÄISCHE PATENTANMELDUNG

(11) **EP 4 807 985 A1**
(43) Veröffentlichungstag der Anmeldung: **16.09.2026**
(21) Anmeldenummer: 25163606.4
(22) Anmeldetag: 13.03.2025
(51) Int. Cl.: H02S 20/23, F24S 25/40, H02S 20/26

(54) **MONTAGEELEMENT FÜR EINE PHOTOVOLTAIKANLAGE, ANORDNUNG AUS EINER MEHRZAHL AN MONTAGEELEMENTEN SOWIE GEBÄUDEFLÄCHE MIT MINDESTENS EINER ANORDNUNG**

(71) Anmelder: Texep AG, 3065 Bolligen (CH)
(72) Erfinder: Posnansky, André Roman, 3065 Bollingen (CH)
(74) Vertreter: Keller Schneider Patent- und Markenanwälte AG

(57) **Zusammenfassung**

Die vorliegende Anmeldung betrifft ein Montageelement (1) für eine Photovoltaikanlage. Das Montageelement umfasst eine viereckige Grundplatte (2) sowie mindestens zwei Stützelemente (4, 5), welche sich von einer ersten Hauptfläche (3) der Grundplatte weg erstrecken. Die freien Enden (11, 12) der mindestens zwei Stützelemente verlaufen relativ zueinander parallel und spannen eine erste Ebene auf. Die mindestens zwei Stützelemente sind derart geformt und dimensioniert, dass die erste Hauptfläche der Grundplatte einen Neigungswinkel von 0.1° bis 45° relativ zur ersten Ebene aufweist. Die zweite Hauptfläche (6) der viereckigen Grundplatte, welche der ersten Hauptfläche gegenüberliegt, weist einen ersten Bereich (7) auf, welchem mindestens eine Solarzelle (9), vorzugsweise jedoch eine Mehrzahl an Solarzellen, angeordnet ist, auf, wobei der erste Bereich von einer ersten Seitenkante der Grundplatte beabstandet ist. Die zweite Hauptfläche weist zwischen dem ersten Bereich und der ersten Seitenkante einen zweiten Bereich (8) auf, auf welchem keine Solarzellen angeordnet sind. Die erste Seitenkante ist diejenige Seitenkante der viereckigen Grundplatte, welche den kleinsten Abstand relativ zur ersten Ebene aufweist. Die vorliegende Anmeldung bezieht sich ferner auf eine Anordnung aus mehreren derartigen Montageelemente sowie auf eine Gebäudefläche mit mindestens einer derartigen Anordnung.

## Beschreibung

### Technisches Gebiet

Die Erfindung betrifft ein Montageelement für eine Photovoltaikanlage, welches es ermöglicht, eine möglichst geschlossene Fläche für die Photovoltaikanlage zu erzeugen, selbst in den Fällen, in denen die Photovoltaikanlage auf einer gebogenen Unterkonstruktion, wie z.B. einem gebogenen Dach, installiert wird. Die vorliegende Erfindung betrifft ferner eine Anordnung aus einer Mehrzahl an derartigen Montagelementen, bei denen sich benachbarte Montageelemente teilweise überlappen, sowie eine Gebäudefläche mit mindestens einer darauf angeordneten Anordnung aus einer Mehrzahl an Montageelementen.

### Stand der Technik

Photovoltaikanlagen erfreuen sich einer zunehmenden Beliebtheit. Demgemäss werden immer mehr Gebäude, sowohl bestehende Gebäude wie auch Neubauten, mit Photovoltaikanlagen auf ihren Aussenflächen ausgestattet. Bei bestehenden Bauten werden Photovoltaikanlagen üblicherweise auf bestehende Gebäudeflächen, insbesondere auf Dächern oder Fassaden montiert, welche als Unterbau für die Photovoltaikanlage dienen, wobei derartige Photovoltaikanlagen gemeinhin als Aufdachanlagen bezeichnet werden. Bei Neubauten können Photovoltaikanlagen jedoch auch als Bestandteil der Gebäudehülle dienen, also mitunter Dach- oder Fassadenelemente ersetzen. Derartige Photovoltaikanlagen werden gemeinhin als gebäudeintegrierte Anlagen bezeichnet.

Eine Photovoltaikanlage umfasst in der Regel eine Mehrzahl an Solarpaneelen bzw. Solarmodulen, welche in einer elektrischen Reihenschaltung miteinander verbunden sind. Der durch die Photovoltaikanlage erzeugte Gleichstrom wird üblicherweise durch einen Wechselrichter in Wechselstrom gewandelt und anschliessend ins Stromnetz eingespeist oder in einer Batterie zur späteren Verwendung zwischengespeichert.

Solarpaneele werden insbesondere bei Aufdachanlagen üblicherweise auf einer Unterkonstruktion aus Systemprofilen befestigt, wobei die Unterkonstruktion ihrerseits auf einer Gebäudefläche montiert ist.

Die handelsüblichen Solarpaneele weisen in der Regel eine viereckige Form auf, insbesondere eine quadratische oder rechteckige Form, wobei teilweise auch rhombusförmige Solarpaneele erhältlich sind. Sofern eine mit einer Photovoltaikanlage auszurüstende Gebäudefläche, wie beispielsweise ein Dach oder eine Fassade, eine rechteckige Grundfläche aufweist, können mittels der quadratischen, rechteckigen oder auch rhombusförmigen Solarpaneele durch eine enge Aneinanderreihung der Solarpaneele Kante an Kante in Reihen gleichmässige, geschlossene Flächen erzielt werden, welche optisch ansprechend sind.

Bei Gebäudeflächen, die eine runde oder gewinkelte Grundfläche aufweisen, wie z.B. ein Dach eines bogenförmigen Gebäudes, lassen sich mittels der viereckigen Solarpaneele keine gleichmässige, geschlossene Fläche erzielen, sondern es verbleiben jeweils grössere Lücken zwischen Kanten von benachbarten Solarpaneelen, durch welche die Unterkonstruktion sichtbar ist, was optisch nicht ansprechend ist.

### Darstellung der Erfindung

Aufgabe der Erfindung ist es, ein Montageelement für eine Photovoltaikanlage zu schaffen, welche es ermöglicht, auch auf gebogenen Grundflächen eine optisch ansprechende, möglichst geschlossene Fläche zu erzeugen, und welche es insbesondere ermöglicht, mehrere Montageelemente nebeneinander in einer gebogenen Reihe anzuordnen, ohne dass zwischen den Montageelementen innerhalb der Reihe Lücken entstehen.

Die Lösung der Aufgabe ist durch die Merkmale des Anspruchs 1 definiert. Gemäss der Erfindung umfasst das Montageelement für eine Photovoltaikanlage eine viereckige Grundplatte sowie mindestens zwei Stützelemente, welche sich von einer ersten Hauptfläche der Grundplatte weg erstrecken. Die freien Enden der mindestens zwei Stützelemente verlaufen relativ zueinander parallel und spannen eine erste Ebene auf. Die mindestens zwei Stützelemente sind derart geformt und dimensioniert, dass die erste Hauptfläche der Grundplatte einen Neigungswinkel von 0.1° bis 45° relativ zur ersten Ebene aufweist. Die zweite Hauptfläche der viereckigen Grundplatte, welche der ersten Hauptfläche gegenüberliegt, weist einen ersten Bereich, auf welchem mindestens eine Solarzelle, vorzugsweise jedoch eine Mehrzahl an Solarzellen, angeordnet ist, wobei der erste Bereich von einer ersten Seitenkante der Grundplatte beabstandet ist. Die zweite Hauptfläche weist zwischen dem ersten Bereich und der ersten Seitenkante einen zweiten Bereich auf, auf welchem keine Solarzellen angeordnet sind. Die erste Seitenkante ist diejenige Seitenkante der viereckigen Grundplatte, welche den kleinsten Abstand relativ zur ersten Ebene aufweist.

Dadurch, dass sich der zweite Bereich, der frei von Solarzellen ist, entlang derjenigen Seitenkante erstreckt, die den geringsten Abstand zur ersten Ebene aufweist, kann der zweite Bereich unter die Grundplatte eines benachbarten Montageelements geschoben werden. Dadurch ergibt sich eine Überlappung benachbarter Montageelemente, was zur Bildung einer optisch ansprechenden, im Wesentlichen ganz geschlossenen Fläche führt, selbst wenn benachbarte Montageelemente relativ zueinander verdreht angeordnet werden, wie dies beispielsweise bei der Montage einer Photovoltaikanlage auf einer gebogenen Grundfläche der Fall ist. Dadurch, dass im zweiten Bereich keine Solarzellen angeordnet sind, wird bei der überlappenden Anordnung der Montagelemente keine Solarzelle durch das benachbarte Montageelement abgedeckt, wodurch die Leistung der Photovoltaikanlage nicht beeinträchtig wird. Die Überlappung von benachbarten Montagelementen wird durch das Anwinkeln der viereckigen Grundplatte relativ zur ersten Ebene ermöglicht, da dadurch einander gegenüberliegende Seitenkanten der Grundplatte relativ zur ersten Ebene unterschiedliche Abstände aufweisen.

Als Solarzelle wird ein elektrisches Bauelement verstanden, welches Sonnenlicht aufgrund des photovoltaischen Effekts direkt in elektrische Energie umwandelt. Solarzellen werden fachsprachlich auch photovoltaische Zellen genannt.

Die Grundplatte besteht vorzugsweise aus einem form- und witterungsbeständigen Material, insbesondere aus einem Metall, wie z.B. Stahl, Edelstahl, Aluminium oder einer Legierung. Alternativ kann die Grundplatte jedoch auch aus einem anderen, geeigneten Material bestehen, wie z.B. einem Polymermaterial. Insbesondere bevorzugt besteht die Grundplatte jedoch aus Glas, insbesondere einem eingefärbten Glas. Da Glas sehr witterungsbeständig ist, kann durch die Verwendung von Glas eine besonders langlebige und sich über die Zeit optisch kaum verändernde Photovoltaikanlage geschaffen werden.

Die Grundplatte ist viereckig, verfügt demnach über vier Seitenkanten, wobei jeweils zwei Seitenkanten in jeweils einer der vier Ecken zusammentreffen. Alle Seitenkanten können jeweils rechtwinklig zu ihren zwei jeweils benachbarten Seitenkanten stehen, vorzugsweise steht jedoch mindestens eine der Seitenkanten in einem anderen Winkel, als einen rechten Winkel, zu ihren benachbarten Seitenkanten. Einander gegenüberliegende Seitenkanten können parallel relativ zueinander stehen, vorzugsweise steht jedoch mindestens eine der Seitenkanten nicht parallel zu der ihr gegenüberliegenden Seitenkante.

Die Grundplatte liegt vorzugsweise in der Form eines konvexen Vierecks vor, d.h. dass die beiden Diagonalen des Vierecks innerhalb der Fläche des Vierecks liegen. Demnach kann die Grundplatte z.B. in der Form eines Quadrates, Rechtecks, Tangentenvierecks, Trapezes, Sehnenvierecks, Drachenvierecks, Parallelogramms oder Rhombuses vorliegen.

Die Seitenkanten können jede für den Einsatzzweck des Montageelements geeignete Länge aufweisen, vorzugsweise weisen die Seitenkanten jedoch eine Länge von zwischen 50 cm und 250 cm, insbesondere bevorzugt von 70 cm bis 150 cm, ganz besonders bevorzugt von 80 cm bis 100 cm auf. Je nach der Form der Grundplatte können alle Seitenkanten gleich lang sein oder auch unterschiedlich lang.

Die Grundplatte weist zwei einander gegenüberliegende Hauptflächen auf. Die beiden Hauptflächen sind parallel relativ zueinander ausgerichtet. Der Abstand zwischen den Hauptflächen entspricht der Dicke der Grundplatte.

Die mindestens zwei Stützelemente sind an einem ihrer Enden mit der Grundplatte verbunden. Das zweite Ende der mindestens zwei Stützelemente, welches von der ersten Hauptfläche weg gerichtet ist, stellt ein freies Ende der mindestens zwei Stützelemente dar. Vorzugsweise umfassen die freien Enden der mindestens zwei Stützelemente Verankerungsmittel auf, mit denen die freien Enden der mindestens zwei Stützelemente auf einer Unterkonstruktion befestigt werden können. Die freien Enden der mindestens zwei Elemente weisen vorzugsweise eine zur Erstreckungsrichtung der mindestens zwei Stützelemente rechtwinklige angeordnete Platte auf, welche über Bohrungen oder Aussparungen verfügt, mit denen sich die Platte mittels Schrauben, Bolzen, Nieten oder ähnlich auf einer Unterkonstruktion befestigen lässt. Alternativ können die freien Enden jedoch auch auf andere Weise auf einer Unterkonstruktion befestigt werden, beispielsweise mittels Klemmbacken, durch Schweissen oder ähnlich.

Die mindestens zwei Stützelemente können auf der ersten Hauptfläche befestigt sein. Alternativ können die mindestens zwei Stützelemente jedoch auch an mindestens einer, vorzugsweise jedoch an zwei einander gegenüberliegenden Seitenkanten der Grundplatte befestigt sein. In letzterem Fall sind die beiden Stützelemente vorzugsweise an denjenigen Seitenkanten befestigt, welche zur ersten Seitenkante benachbart sind.

Die freien Enden der mindestens zwei Stützelemente sind relativ zueinander parallel ausgerichtet und spannen einen erste Ebene auf. Die erste Ebene stellt hierbei im Wesentlichen eine gedankliche Ebene dar. Sobald das Montageelement jedoch auf einer Unterkonstruktion befestigt wird, fällt die erste Ebene mit der Oberfläche der Unterkonstruktion zusammen. Demnach kann die erste Ebene auch als Montageebene bezeichnet werden.

Die mindestens zwei Stützelemente sind vorzugsweise derart geformt und dimensioniert, dass entweder diejenige Seitenkante der viereckigen Grundplatte, welche den kleinsten Abstand zur ersten Ebene aufweist oder diejenige Seitenkante, die den grössten Abstand relativ zur ersten Ebene aufweist, parallel zur ersten Ebene verläuft.

Durch den Neigungswinkel stehen mindestens die zwei einander gegenüberliegende Seitenkanten, die zur ersten Seitenkante benachbart sind, in einem Winkel relativ zu ersten Ebene. Dieser Winkel entspricht dabei dem Neigungswinkel der Grundplatte relativ zur ersten Ebene.

Die mindestens zwei Stützelemente können in der Form von Pfosten oder Beinen ausgeführt sein, welche insbesondere unterschiedliche Längen, das heisst über eine unterschiedliche Ausdehnung zwischen ihrem ersten Ende und ihrem freie Enden verfügen. Das Montageelement verfügt vorzugsweise über genau zwei Stützelemente, kann jedoch je nach Ausführungsform auch über mehr Stützelemente verfügen, wie beispielsweise drei, vier, fünf, sechs oder mehr Stützelemente.

Der Neigungswinkel ist vorzugsweise derart gewählt, dass die zweite Hauptfläche der Grundplatte im Bereich der ersten Seitenkante, die den kleinsten Abstand zur ersten Ebene aufweist, einen Abstand zur ersten Ebene aufweist, der maximal gleich gross, vorzugsweise jedoch mindestens 0.1mm kleiner ist, wie der Abstand der ersten Hauptfläche zur ersten Ebene im Bereich der Seitenkante, die der ersten Seitenkante gegenüberliegt und demnach den grössten Abstand relativ zur ersten Ebene aufweist. Dadurch lassen sich zwei Montageelemente einfach und ohne dass diese sich miteinander verkannten ineinander schieben, so dass in der Folge eine im Wesentlichen zusammenhängende Fläche entsteht.

Demnach hängt der gewählte Neigungswinkel im Wesentlichen von der Dicke der Grundplatte ab. Alternativ kann der Neigungswinkel jedoch auch derart gewählt werden, dass bei der Überlappung des zweiten Bereichs eines ersten Montageelements durch ein zweites Montageelement ein definierter Abstand zwischen der zweiten Hauptfläche des ersten Montageelements und der ersten Hauptfläche des zweiten Montageelements besteht, beispielsweise um eine Durchlüftung des Zwischenraumes zwischen einer Unterkonstruktion und den Montageelementen zu ermöglichen.

Der erste Bereich weist vorzugsweise eine viereckige Form auf und erstreckt sich vorzugsweise im Wesentlichen bis zu den zwei einander gegenüberliegenden Seitenkanten, welche zur ersten Seitenkante benachbart sind. Weiter bevorzugt kann sich der erste Bereich auch bis zur Seitenkante, welche der ersten Seitenkante gegenüberliegt, erstrecken. Bei gewissen Ausführungsformen kann der erste Bereich jedoch auch einen Abstand zu mindestens einer weiteren Seitenkante aufweisen, wobei in diesem Fall die zweite Hauptfläche zwischen dem ersten Bereich und der mindestens einen weiteren Seitenkante mindestens einen weiteren Bereich aufweist, der frei von Solarzellen ist.

Vorzugsweise weist der erste Bereich zusätzlich zu einer zweiten Seitenkante, welche der ersten Seitenkante gegenüberliegt, einen Abstand auf. Die zweite Hauptfläche weist in diesem Fall zwischen dem ersten Bereich und der zweiten Seitenkante einen dritten Bereich auf, welcher frei von Solarzellen ist. Der Abstand zwischen dem ersten Bereich und der zweiten Seitenkante ist hierbei vorzugsweise gleich, wie der Abstand zwischen dem ersten Bereich und der ersten Seitenkante.

Sofern auf dem ersten Bereich mehrere Solarzellen angeordnet sind, so sind diese vorzugsweise in einer oder in mehreren Reihen auf dem ersten Bereich angeordnet.

Die mindestens eine Solarzelle ist vorzugsweise direkt auf der zweiten Hauptfläche der Grundplatte aufgetragen, insbesondere aufgedampft. Die mindestens eine Solarzelle ist in diesem Fall vorzugsweise eine Dünnschichtsolarzelle. Bei Ausführungsformen, bei denen die mindestens eine Solarzelle direkt auf der zweiten Hauptfläche der Grundplatte aufgetragen ist, stellt das Montageelement ein Solarpaneel dar.

Alternativ kann die mindestens eine Solarzelle jedoch in wenigstens einem Solarpaneel integriert sein, welches wiederum auf der Grundplatte befestigt ist. In diesem Fall dient das Montageelement als Tragestruktur für das wenigstens eine Solarpaneel. Zur Befestigung des wenigstens einen Solarpaneels verfügt der erste Bereich vorzugsweise über geeignete Befestigungsmittel, wie z.B. Bohrungen für Schrauben oder Bolzen, oder auch über Profilelemente, an welchen das wenigstens eine Solarpaneel befestigt werden kann.

Ferner weist die Grundplatte im ersten Bereich vorzugsweise mindestens eine Durchgangsöffnung auf, durch welche elektrische Kabel, welche mit der mindestens einen Solarzelle verbunden sind, durch die Grundplatte hindurch in einen Zwischenraum zwischen der ersten Hauptfläche und der ersten Ebene geführt werden können. Sofern auf dem ersten Bereich mehr als eine Solarzelle angeordnet ist, so sind die Solarzellen wie aus dem Stand der Technik bekannt miteinander elektrisch in Serie geschaltet, insbesondere über entsprechende Leiter- oder Kabelverbindungen.

Der zweite Bereich erstreckt sich vorzugsweise bis zu den beiden Seitenkanten, welche zur ersten Seitenkante benachbart sind. Das heisst, dass sich der zweite Bereich vorzugsweise bis zu denjenigen Seitenkanten erstreckt, welche der ersten Seitenkante angrenzen.

Vorzugsweise verfügt das Montageelement über mindestens zwei längliche Stützelemente, welche parallel relativ zueinander auf der ersten Hauptfläche angeordnet sind und sich parallel relativ zu mindestens einer von der ersten Seitenkante unterschiedlichen Seitenkante der Grundplatte erstrecken.

Dies ermöglicht eine möglichst gleichmässige Abstützung des Montageelements auf einer Unterkonstruktion. Zudem erhöht dies die Steifheit des Montageelements, so dass zuverlässig verhindert werden kann, dass sich das Montageelement aufgrund von darauf einwirkenden Lasten, z.B. eine Schnee- oder Windlast, durchbiegt.

Vorzugsweise erstrecken sich die mindestens zwei länglichen Stützelemente parallel zur Seitenkante, welche der ersten Seitenkante gegenüberliegt. Falls die erste Seitenkante parallel zu der ihr gegenüberliegenden Seitenkante ist, so liegt der Spezialfall vor, dass die mindestens zwei länglichen Stützelemente dann auch parallel zur ersten Seitenkante (wie auch zur gegenüberliegenden Seitenkante) parallel ausgerichtet sind.

Alternativ bevorzugt erstrecken sich die mindestens zwei länglichen Stützelemente jedoch parallel zu mindestens einer der Seitenkanten, welche zur ersten Seitenkante benachbart sind.

Die längere Ausdehnungsrichtung der mindestens zwei länglichen Stützelemente liegt parallel zur ersten Hauptfläche der Grundplatte. Das heisst, dass die länglichen Stützelemente jeweils mit einer ihrer längeren Kanten an der ersten Hauptfläche oder an mindestens einer der Seitenkanten befestigt sind.

Insbesondere bevorzugt verfügt das Montageelement über genau zwei längliche Stützelemente. Sofern die Grundplatte jedoch grosse Dimensionen aufweist oder eine möglichst grossflächige Kraftableitung auf eine Unterkonstruktion nötig ist, können auch mehr als zwei längliche Stützelemente vorhanden sein, insbesondere drei, vier, fünf oder mehr.

Die mindestens zwei länglichen Stützelemente weisen vorzugsweise eine Länge auf, welche kleiner ist als die Länge der mindestens einen Seitenkante, relativ zu welcher sich die mindestens zwei länglichen Stützelemente parallel erstrecken.

Diese Ausführungsform ist insbesondere in dem Fall vorteilhaft, bei denen sich die mindestens zwei länglichen Stützelemente parallel zu einer der Seitenkanten, welche zur ersten Seitenkante benachbart sind, erstrecken. In diesem Fall wird die Länge der mindestens zwei länglichen Stützelemente vorzugsweise derart gewählt, dass sich diese nicht näher zur Seitenkante, welche der ersten Seitenkante gegenüberliegt, hin erstrecken als der Abstand zwischen dem ersten Bereich und der ersten Seitenkante. Das heisst, die mindestens zwei länglichen Stützelemente weisen zur der ersten Seitenkante gegenüberliegenden Seitenkante einen Abstand auf, der mindestens dem Abstand zwischen dem ersten Bereich und der ersten Seitenkante entspricht. Dadurch bilden die mindestens zwei länglichen Stützelemente einen Anschlag, der es verunmöglicht, ein erstes Montageelement derart weit über den zweiten Bereich eines zweiten Montageelements zu schieben, dass der erste Bereich des zweiten Montageelements durch das erste Montageelement überdeckt wird.

Die mindestens zwei länglichen Stützelemente erstrecken sich vorzugsweise maximal über 90%, weiter bevorzugt maximal über 80%, besonders bevorzugt maximal über 70% der Länge derjenigen Seitenkante, zu welcher diese parallel angeordnet sind.

Vorzugsweise ist ein Abstand zwischen der ersten Hauptfläche sowie dem freien Ende der mindestens zwei länglichen Stützelemente bei einem ersten der mindestens zwei Stützelemente kleiner als bei einem zu diesem ersten Stützelement benachbarten zweiten Stützelement.

Bei dieser Ausführungsform sind die mindestens zwei länglichen Stützelemente vorzugsweise parallel zu einer Seitenkante ausgerichtet, welche der ersten Seitenkante gegenüberliegt.

Der Abstand zwischen der ersten Hauptfläche und dem freien Ende eines der länglichen Stützelemente entspricht der Höhe des entsprechenden länglichen Stützelements. Dadurch, dass jeweils ein Stützelement relativ zu einem benachbarten länglichen Stützelements eine geringere Höhe aufweist, kann der Neigungswinkel der ersten Hauptfläche der Grundplatte relativ zur ersten Ebene erzielt werden. Weist das Montageelement mehr als zwei längliche Stützelemente auf, so nimmt der Abstand zwischen der ersten Hauptfläche und dem jeweiligen freien Ende der länglichen Stützelemente, d.h. ihre Höhe, zur der ersten Seitenkante gegenüberliegenden Seitenkante hin stetig zu.

Vorzugsweise liegen die mindestens zwei Stützelemente in der Form von gleichwinkligen Trapezen vor, welche parallel zu einer Seitenkante ausgerichtet sind, die zur ersten Seitenkante benachbart ist.

Durch die Ausgestaltung der mindestens zwei länglichen Stützelemente als gleichwinklige Trapeze kann der Neigungswinkel zwischen der ersten Hauptfläche und der ersten Ebene erzielt werden.

Ein gleichwinkliges Trapez besitzt mindestens zwei rechte Winkel, die nebeneinander liegen.

Vorzugsweise verfügt das Montageelement bei dieser Ausführungsform über zwei längliche Stützelemente, welche entlang von zwei einander gegenüberliegenden Seitenkanten der Grundplatte auf der ersten Hauptfläche angeordnet sind, wobei keine dieser zwei einander gegenüberliegenden Seitenkanten die erste Seitenkante ist. Vorzugsweise sind die zwei länglichen Stützelemente hierbei an den zwei einander gegenüberliegenden Seitenkanten befestigt. Weiter bevorzugt sind diese beiden Seitenkanten parallel relativ zueinander.

Vorzugsweise ist die erste Seitenkante relativ zu ihren zwei benachbarten Seitenkanten jeweils in einem zu einem rechten Winkel unterschiedlichen Winkel angeordnet. Das heisst, dass die erste Seitenkante relativ zu ihren benachbarten Seitenkanten in einem Winkel angeordnet ist, welcher von 90° abweicht.

Vorzugsweise liegt dieser Winkel im Bereich von 1° bis 45°, insbesondere bevorzugt von 2° bis 25°, ganz besonders bevorzugt von 3° bis 15°.

Vorzugsweise weist die viereckige Grundplatte die Form eines Trapezes auf, insbesondere eines rechtwinkligen Trapezes oder eines gleichschenkligen Trapezes.

Alternativ bevorzugt weist die viereckige Grundplatte die Form eines Quadrates, eines Rechteckes, eines Parallelogramms oder eines Rhombus auf.

Die vorliegende Anmeldung betrifft ferner eine Anordnung aus einer Mehrzahl von Montageelementen gemäss der oben stehenden Beschreibung, wobei mindestens ein erstes der Montagelemente derart neben mindestens einem zweiten Montagelement angeordnet ist, dass die viereckige Grundfläche des mindestens einen zweiten Montageelements den ersten Bereich des mindestens einen ersten Montageelements zumindest teilweise, vorzugsweise jedoch vollständig, überdeckt. Die ersten Ebenen des mindestens einen ersten Montageelements sowie des mindestens einen zweiten Montageelements sind vorzugsweise beide in einer zweiten Ebene angeordnet.

Die zweite Ebene ist vorzugsweise eine äusserste Fläche einer Unterkonstruktion, auf welcher die Anordnung angeordnet ist. Die zweite Ebene stellt hierbei eine Ebene dar, in welcher alle ersten Ebenen der Montageelemente der Anordnung liegen.

Vorzugsweise umfasst die Anordnung mindestens eine Reihe von Montageelementen, wobei mit Ausnahme des letzten Montageelements in der Reihe die zweiten Bereiche der zweiten Hauptfläche aller Montageelemente zumindest teilweise durch ein benachbartes Montagelement überdeckt werden. Dadurch entstehen zwischen benachbarten Montageelementen der mindestens einen Reihe keine Lücken, so dass diese optisch als eine zusammenhängende Fläche wahrgenommen wird.

Bevorzugt umfasst die Anordnung mehrere derartiger Reihen an Montagelementen, wobei die Reihen möglichst einander berührend nebeneinander angeordnet sind.Die Anordnung ist vorzugsweise auf einer geeigneten Unterkonstruktion befestigt, insbesondere auf einer Struktur von Profilen. Die Unterkonstruktion kann auf einer Gebäudefläche angeordnet sein oder selbst ein Bestandteil einer Gebäudehülle darstellen.

Vorzugsweise ist das mindestens eine erste Montageelement relativ zum mindestens einen zweiten Montageelement um einen Winkel, insbesondere von 1° bis 45°, gedreht angeordnet.

Diese Ausführungsform ist besonders dazu geeignet, gebogene Flächen mit einer Photovoltaikanlage auszustatten, da eine durch mehrere Montageelemente gebildete Reihe selbst eine Krümmung aufweist. Das heisst, dass die Mittelpunkte aller Grundplatten der Montageelemente in einer Reihe entlang einer gedachten gekrümmten, insbesondere bogenförmigen Linie liegen. Als Mittelpunkt einer viereckigen Grundplatte wird der Schnittpunkt der beiden Diagonalen der viereckigen Grundplatte verstanden. Der Radius dieser gedachten bogenförmigen Linie kann durch eine geeignete Auswahl des Winkels, in welchem ein Montageelement relativ zu einem benachbarten Montageelement angeordnet ist, variiert werden.

Sofern die Anordnung über mehrere Reihen von Montageelementen verfügt, so entstehen zwischen den Reihen aufgrund der Form der Grundplatte teilweise geringfügige Lücken. Da diese Lücken aufgrund ihrer geringen Grösse aus einiger Distanz kaum wahrgenommen werden, wird die Anordnung optisch trotzdem als im Wesentlichen eine geschlossene Oberfläche aufweisend wahrgenommen, insbesondere bei Personen, die vom Boden aus auf z.B. ein Dach mit einer derartigen Anordnung blicken.

Vorzugsweise werden derartige Lücken zwischen zwei Reihen von Montageelementen jedoch mit entsprechend geformten Abdeckungselementen geschlossen, wobei die Abdeckungselemente vorzugsweise aus demselben Material bestehen, wie die Grundplatten. Dadurch kann daher selbst bei einer Anordnung, welche eine Mehrzahl an nebeneinander liegenden, gekrümmten Reihen von Montageelementen umfasst eine im Wesentlichen geschlossene Oberfläche erzielt werden, was optisch sehr ansprechend wirkt.

Vorzugsweise ist im Überdeckungsbereich zwischen der ersten Hauptfläche des mindestens einen zweiten Montageelements und der zweiten Hauptfläche des mindestens einen ersten Montageelements mindestens ein Dichtungselement, insbesondere ein Quetschdichtungselement, angeordnet.

Durch die Anordnung des mindestens einen Dichtungselements kann verhindert werden, dass Wasser oder Schmutz in den Zwischenraum zwischen der ersten Hauptfläche und der ersten Ebene eindringt. Das mindestens eine Dichtungselement ist vorzugsweise aus einem Polymer oder aus Gummi gefertigt. Das mindestens eine Dichtungselement weist vorzugsweise in seinem Grundzustand die Form eines Hohlzylinders auf, wodurch das mindestens eine Dichtungselement durch Einquetschen zwischen der ersten Hauptfläche eines Montageelements und der zweiten Hauptfläche eines benachbarten Montageelements eine besonders gute Dichtwirkung erzielt.

Vorzugsweise ist das mindestens eine Dichtungselement derart geformt, dass sich dieses zusätzlich entlang der ersten Seitenkante in Richtung der ersten Hauptfläche erstreckt, wenn dieses auf der zweiten Hauptfläche eines Montageelements angeordnet wird. Hierfür kann das mindestens eine Dichtungselement beispielsweise L-förmig ausgestaltet sein. Dadurch wird eine zusätzliche Dichtwirkung erzielt.

Vorzugsweise umfasst die Anordnung mindestens ein blindes Montageelement bei welchem im ersten Bereich keine Solarzelle angeordnet ist. Eine derartige Anordnung enthält jedoch stets mindestens ein Montageelement, vorzugsweise jedoch mehrere Montageelemente, bei dem im ersten Bereich mindestens eine Solarzelle angeordnet ist. Vorzugsweise verfügen bei einer derartigen Anordnung mindestens 50%, vorzugsweise jedoch mindestens 70% der Montageelemente über einen ersten Bereich mit mindestens einer Solarzelle. Das heisst, dass stets weniger als die Hälfte der in der Anordnung vorhandenen Montageelemente blinde Montageelemente sind.

Ein derartiges blindes Montageelement ohne Solarzelle im ersten Bereich kann demnach zur Überbrückung bzw. Bedeckung von Bereichen, in denen keine Erzeugung von Solarstrom gewünscht wird, verwendet werden. Sofern die Anordnung über mehrere Reihen nebeneinander angeordneter Montageelemente verfügt, so kann auch eine oder mehrere dieser Reihen gänzlich aus blinden Montageelementen bestehen, welche im ersten Bereich über keine Solarzelle verfügen. Dies erhöht die Flexibilität bei der Gestaltung einer Photovoltaikanlage, da damit auch Gebäudeflächen, wie z.B. eine Dachseite, die sich nicht zur Erzeugung von Solarstrom eignen, mit optisch gleich aussehenden Montageelementen bestücken lassen, so dass ein Gebäude bzw. dessen Dach insgesamt ein einheitliches Erscheinungsbild erhält.

Die vorliegende Anmeldung bezieht sich ferner auf eine Gebäudefläche, insbesondere auf ein Dach oder auf ein Fassadenelement, mit mindestens einer auf der Gebäudefläche angeordneten Anordnung gemäss oben stehender Beschreibung. Das heisst, dass auf der Gebäudefläche mehrere Montageelemente angeordnet sind, wobei die zweiten Bereiche der meisten Montageelemente jeweils durch ein benachbartes Montageelement zumindest teilweise überdeckt sind. Die Montagelemente sind vorzugsweise in mehreren nebeneinander stehenden Reihen auf der Gebäudefläche angeordnet. Vorzugsweise bedeckt die mindestens eine Anordnung im Wesentlichen die gesamte Grundfläche der Gebäudefläche, das heisst mindestens 70%, vorzugsweise mindestens 80%, besonders bevorzugt mindestens 90% der Grundfläche der Gebäudefläche.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer ersten Ausführungsform eines erfindungsgemässen Montageelements in einer Draufsicht;
- Fig. 2: eine schematische Seitenansicht der ersten Ausführungsform des Montageelements gemäss der Fig. 1;
- Fig. 3: eine Anordnung mit zwei Montageelementen gemäss der in den Fig. 1 und 2 gezeigten ersten Ausführungsform in einer Seitenansicht;
- Fig. 4: eine schematische Darstellung einer zweiten Ausführungsform eines erfindungsgemässen Montageelements in einer Draufsicht;
- Fig. 5: eine schematische Seitenansicht der zweite Ausführungsform des Montageelements gemäss der Fig. 4;
- Fig. 6: eine Seitenansicht einer Anordnung aus zwei Montageelementen gemäss der zweiten Ausführungsform;
- Fig.. 7: eine dritte Ausführungsform eines erfindungsgemässen Montageelements in einer schematischen perspektivischen Ansicht;
- Fig. 8: die dritte Ausführungsform gemäss der Fig. 7 in einer Draufsicht;
- Fig. 9: die dritte Ausführungsform gemäss der Figuren 7 und 8 in einer Seitenansicht;
- Fig. 10: eine vierte Ausführungsform eines erfindungsgemässen Montageelements in einer perspektivischen Ansicht;
- Fig. 11: die vierte Ausführungsform gemäss der Fig. 10 in einer Draufsicht;
- Fig. 12: die vierte Ausführungsform gemäss der Figuren 10 und 11 in einer Seitenansicht;
- Fig. 13: eine fünfte Ausführungsform eines erfindungsgemässen Montageelements in einer perspektivischen Ansicht;
- Fig. 14: die fünfte Ausführungsform gemäss der Fig. 13 in einer Draufsicht;
- Fig. 15: die vierte Ausführungsform gemäss der Figuren 12 und 13 in einer Seitenansicht;
- Fig. 16: eine schematische Draufsicht einer Ausführungsform einer erfindungsgemässen Anordnung mit einer Mehrzahl an Montageelementen;
- Fig. 17: eine schematische Draufsicht auf eine sechste Ausführungsform eines erfindungsgemässen Montageelements.

Grundsätzlich sind in den Figuren gleiche Teile mit gleichen Bezugszeichen versehen.

### Wege zur Ausführung der Erfindung

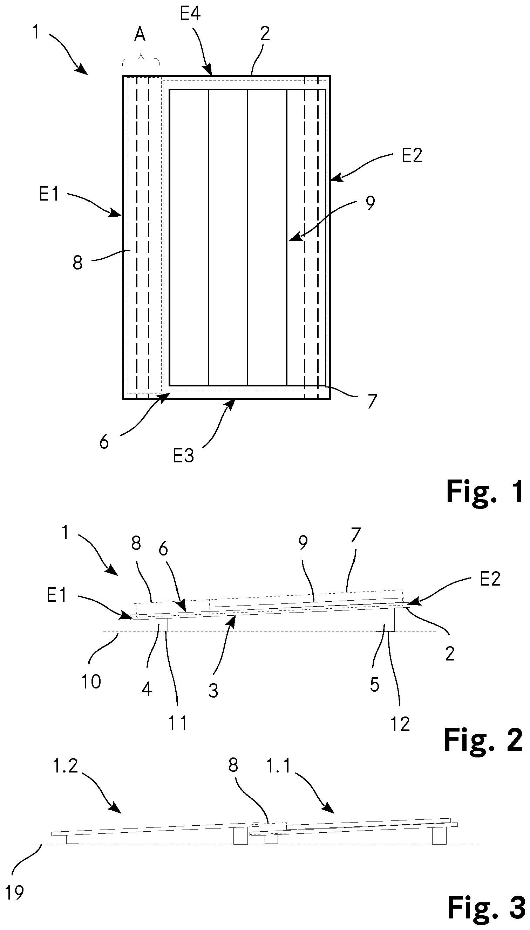

Die Fig. 1 zeigt eine schematische Darstellung einer ersten Ausführungsform eines erfindungsgemässen Montageelements 1 in einer Draufsicht. Das Montageelement 1 umfasst eine viereckige Grundplatte 2, welche über vier Seitenkanten E1, E2, E3, E4, eine erste Hauptfläche 3 (siehe Fig. 2) und eine der ersten Hauptfläche 3 gegenüberliegende zweite Hauptfläche 6 verfügt. In der gezeigten Ausführungsform weist die Grundplatte 2 eine rechteckige Form auf. Hierbei weisen eine erste Seitenkante E1 sowie eine dieser gegenüberliegende zweite Seitenkante E2 eine grössere Länge auf, als die dritte Seitenkante E3 und die vierte Seitenkante E4. Auf der zweiten Hauptfläche 6 weist die Grundplatte 2 einen ersten Bereich 7 auf, auf welchem mehrere Solarzellen 9 angeordnet sind. Der erste Bereich 7 weist zur ersten Seitenkante E1 einen Abstand A auf. Zwischen der ersten Seitenkante E1 und dem ersten Bereich 7 erstreckt sich ein zweiter Bereich 8, der frei von Solarzellen ist.

Die Fig. 2 zeigt schematisch eine Seitenansicht der ersten Ausführungsform eines erfindungsgemässen Montageelements 1 gemäss der Fig. 1. Wie in der Fig. 2 zu erkennen ist, umfasst das Montageelement 1 zwei längliche Stützelemente 4, 5, welche beide parallel zueinander und parallel zur zweiten Seitenkante E2 ausgerichtet sind (und welche auf der

Fig. 1 gestrichelt dargestellt sind). Die beiden länglichen Stützelemente erstrecken sich von der ersten Hauptfläche 3 der Grundplatte 2 weg und sind mit dieser befestigt. Da die Grundplatte 2 bei der gezeigten Ausführungsform rechteckig ist, sind die beiden länglichen Stützelemente 4, 5 ebenfalls parallel zur ersten Seitenkante E1 ausgerichtet. Wie weiter auf der Fig. 2 erkannt werden kann, weisen die beiden länglichen Stützelemente 4, 5 jeweils ein freies Ende 11, 12 auf. Die beiden freien Enden 11, 12 verlaufen parallel zueinander und in einer ersten Ebene 10. Die beiden länglichen Stützelemente 4, 5 weisen bei dieser Ausführungsform die Form eines Rechteckes auf.

Ein erstes längliches Stützelement 4 weist zwischen der ersten Hauptfläche 3 und seinem entsprechenden freien Ende 11 eine geringere Dimension auf, als das zweite längliche Stützelement 5 zwischen der Hauptfläche 3 und seinem entsprechenden freien Ende 12. Da die beiden freien Enden 11, 12 in der ersten Ebene 10 liegen, ergibt sich durch diesen Unterschied ein Neigungswinkel zwischen der ersten Hauptfläche 3 und der ersten Ebene 10, beziehungsweise zwischen der Grundplatte 2 und der ersten Ebene 10. Wie erkannt werden kann, befinden sich die erste Seitenkante E1 und somit auch der zweite Bereich 8 der zweiten Hauptfläche 6 in der Nähe des ersten länglichen Stützelements 4. Dadurch weist die erste Seitenkante E1 im Vergleich zu den drei weiteren Seitenkanten E2, E3, E4 den geringsten Abstand zur ersten Ebene 10 auf.

Die Fig. 3 zeigt eine Anordnung mit zwei Montageelementen 1.1, 1.2 gemäss der in den Fig. 1 und 2 gezeigten ersten Ausführungsform in einer Seitenansicht. Dadurch, dass die erste Seitenkante E1 der Grundplatte 2 den geringsten Abstand zur ersten Ebene 10 aufweist und die Grundplatte 2 relativ zur ersten Ebene 10 einen Neigungswinkel aufweist, lässt sich der zweite Bereich eines ersten Montageelements 1.1 unter die der ersten Seitenkante E1 gegenüberliegende zweite Seitenkante E2 eines zweiten Montageelements 1.2 schieben, so dass der zweite Bereich 8 des ersten Montageelements 1.1 teilweise durch das zweite Montageelement 1.2 überdeckt wird. Dadurch wird eine lückenlose Anordnung der Montageelemente 1.1, 1.2 ermöglicht, wodurch sich eine zusammenhängende, optisch ansprechende Fläche ergibt. Zu beachten ist hierbei, dass die beiden ersten Ebenen 10 der zwei Montageelemente 1.1, 1.2 in einer gemeinsamen, zweiten Ebene 19 liegen.

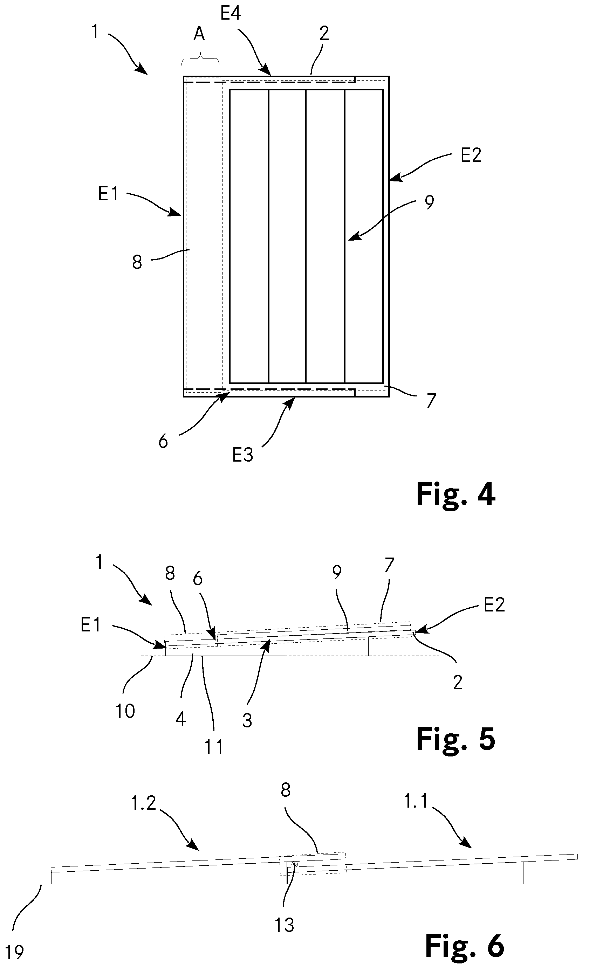

Die Fig. 4 zeigt eine schematische Darstellung einer zweiten Ausführungsform eines erfindungsgemässen Montageelements 1 in einer Draufsicht. Die zweite Ausführungsform des Montageelements weist im Wesentlichen dieselben Elemente und Konfiguration auf, wie die erste Ausführungsform, jedoch mit dem Unterschied, dass die beiden länglichen Stützelemente 4, 5 (gestrichelt dargestellt) anders ausgerichtet sind.

Wie der Fig. 5 zu entnehmen ist, sind die beiden länglichen Stützelemente 4, 5 parallel relativ zur dritten Seitenkante E3 ausgerichtet. Da die Grundplatte 2 eine rechteckige Form aufweist, erstrecken sich die beiden länglichen Stützelemente 4, 5 ebenfalls parallel zur vierten Seitenkante E4, welche der dritten Seitenkante E3 gegenüberliegt. Hierbei erstrecken sich die beiden länglichen Stützelement 4, 5 entlang der dritten Seitenkante E3 bzw. der vierten Seitenkante E4. Die beiden länglichen Stützelemente 4, 5 weisen die Form eines rechtwinkligen Trapezes auf.

Die Länge der beiden länglichen Stützelemente 4, 5, das heisst ihre Dimension in Erstreckungsrichtung der jeweiligen Seitenkante E3, E4 ist jedoch kleiner, als die Länge der jeweiligen Seitenkante E3, E4. Bei der gezeigten Ausführungsform erstrecken sich die beiden länglichen Stützelemente 4, 5 von der ersten Seitenkante E1, welche zur dritten Seitenkante E3 bzw. vierten Seitenkante E4 benachbart ist, bis zu einer Position, welche gleich weit von der zweiten Seitenkante E2 beabstandet ist, wie der ersten Bereich von der ersten Seitenkante E1 beabstandet ist. Dadurch bilden die beiden länglichen Stützelemente 4, 5 zur zweiten Seitenkante E2 hin einen Anschlag.

Die Fig. 6 zeigt eine Seitenansicht einer Anordnung aus zwei Montageelementen 1.1, 1.2 gemäss der zweiten Ausführungsform. Analog zur Anordnung mit der ersten Ausführungsform des Montageelements 1 gemäss Fig. 3 ist der zweite Bereich 8 eines ersten Montageelements 1.1 unter die der ersten Seitenkante E1 gegenüberliegende zweite Seitenkante E2 eines zweiten Montageelements 1.2 geschoben, so dass der zweite Bereich 8 der ersten Montageelements 1.1 teilweise durch das zweite Montageelement 1.2 überdeckt wird. Durch den weiter oben im Zusammenhang mit der Fig. 5 erwähnten Anschlag, der durch die beiden länglichen Stützelemente 4, 5 gebildet wird, kann sichergestellt werden, dass das erste Montageelement 1.1 nicht so weit unter das zweite Montageelement 1.2 geschoben werden kann, dass der erste Bereich des ersten Montageelementes 1.1 vom zweiten Montageelement 1.2 überdeckt wird.

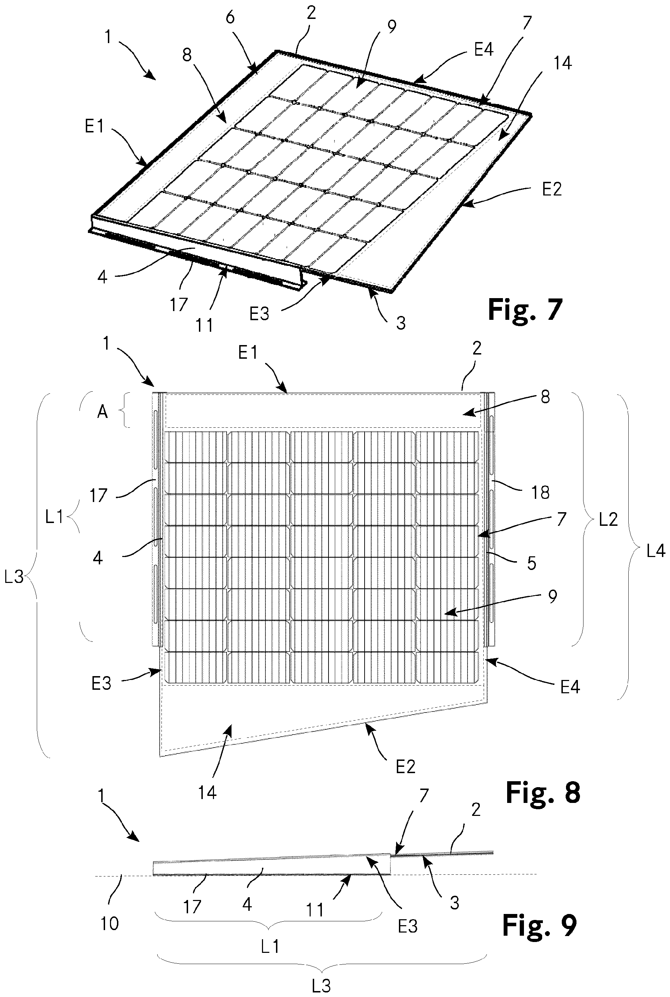

Weiter ist in der Fig. 8 ersichtlich, dass ein Dichtungselement 13 im Bereich der Überlappung des zweiten Montageelements 1.2 mit dem ersten Montageelement 1.1 zwischen der zweiten Hauptfläche 6 des ersten Montageelements 1.1 und der ersten Hauptfläche 3 des zweiten Montageelements 1.2 angeordnet ist. Das Dichtungselement 13 ist bei der gezeigten Ausführungsform zylindrisch ausgestaltet und besteht vorzugsweise aus Gummi, so dass das Dichtungselement 13 im Sinne einer Quetschdichtung zwischen der zweiten Hauptfläche 6 des ersten Montageelements 1.1 und der ersten Hauptfläche 3 des zweiten Montageelements 1.2 eingequetscht wird. Mittels des Dichtungselements 13 kann verhindert werden, dass Wasser oder Schmutz in den Zwischenraum unterhalb der Grundplatte 2 des zweiten Montageelements 1.2 eindringen kann.

Die Fig. 7 zeigt eine dritte Ausführungsform eines erfindungsgemässen Montageelements 1 in einer schematischen perspektivischen Ansicht. Die gezeigte dritte Ausführungsform ist im Wesentlichen gleich konfiguriert wie die in den Figuren 4 bis 6 gezeigte, zweite Ausführungsform. Im Unterschied zu dieser ist beim Montageelement 1 gemäss der dritten Ausführungsform die zweite Seitenkante E2, die der ersten Seitenkante E1 gegenüberliegt, nicht rechtwinklig zu den benachbarten dritten Seitenkante E3 und vierten Seitenkante E4, sondern in einem Winkel von ca. 8° relativ zu diesen geneigt. Dadurch erhält die Grundplatte 2 die Form eines rechtwinkligen Trapezes, wobei die dritte Seitenkante E3 über eine grössere Länge L3 verfügt, als die Länge L4 vierte Seitenkante E4.

Der erste Bereich 7 ist nicht nur von der ersten Seitenkante E1, sondern auch von der zweiten Seitenkante E2 beabstandet. Dadurch weist die zweite Hauptfläche 6 der Grundplatte 2 einen dritten Bereich 14 auf, der ebenfalls frei von Solarzellen ist. Durch die gewinkelte Anordnung der zweiten Seitenkante E2 relativ zur dritten Seitenkante E3 und der vierten Seitenkante E4 weist der dritte Bereich 14 die Form eines rechtwinkligen Trapezes auf.

Die beiden länglichen Stützelemente 4, 5 erstrecken sich entlang der dritten Seitenkante E3 und der vierten Seitenkante E4 und von der ersten Hauptfläche 3 der Grundplatte 2 weg. Die länglichen Stützelemente 4, 5 weisen wiederum die Form eines rechtwinkligen Trapezes auf. Im Unterschied zur zweiten Ausführungsform weisen die beiden länglichen Stützelemente 4, 5 an ihren freien Enden 11, 12 jeweils über ein Befestigungsmittel 17, 18, auf, welches in der Form einer Abstützplatte vorliegt, die beidseitig rechtwinklig vom jeweiligen länglichen Stützelement 4, 5 absteht. Die Befestigungsmittel 17, 18 weisen mehrere Längsöffnungen auf, durch welche Schrauben, Bolzen oder Nieten durchgeführt werden können, um das Montageelement 1 auf einer Unterkonstruktion zu befestigen.

Die beiden länglichen Stützelemente 4, 5 erstrecken sich nicht über die gesamte Länge L3, L4 der jeweiligen Seitenkante E3, E4, sondern nur über einen Teil der Seitenkanten E3, E4, nämlich von der ersten Seitenkante E1 bis zu einem Punkt, der jeweils mindestens so weit von der zweiten Seitenkante E2 beabstandet ist, wie der Abstand A zwischen dem ersten Bereich 7 und der ersten Seitenkante E1.

Die Fig. 8 zeigt die dritte Ausführungsform gemäss der Fig. 7 in einer Draufsicht. Gut erkennbar ist die kürzere Länge L1, L2 der beiden länglichen Stützelemente 4, 5 relativ zur Länge L3 der dritten Seitenkante E3 bzw. zur Länge L4 der vierten Seitenkante E4. Hierbei ist zu beachten, dass die Länge L3 der dritten Seitenkante E3 wegen der gewinkelten Anordnung der zweiten Seitenkante E2 relativ zur dritten Seitenkante E3 und der vierten Seitenkante E4 grösser ist als die Länge L4 der vierten Seitenkante E4. Die Längen L1, L2 der beiden länglichen Stützelemente 4, 5 ist bei der gezeigten Ausführungsform gleich.

Die Fig. 9 zeigt die dritte Ausführungsform gemäss der Figuren 7 und 8 in einer Seitenansicht. Gut erkennbar ist, dass die Befestigungsmittel 17, 18 in der ersten Ebene 10 liegen, gegenüber der die erste Hauptfläche 3 bzw. die Grundplatte 2 angewinkelt ist.

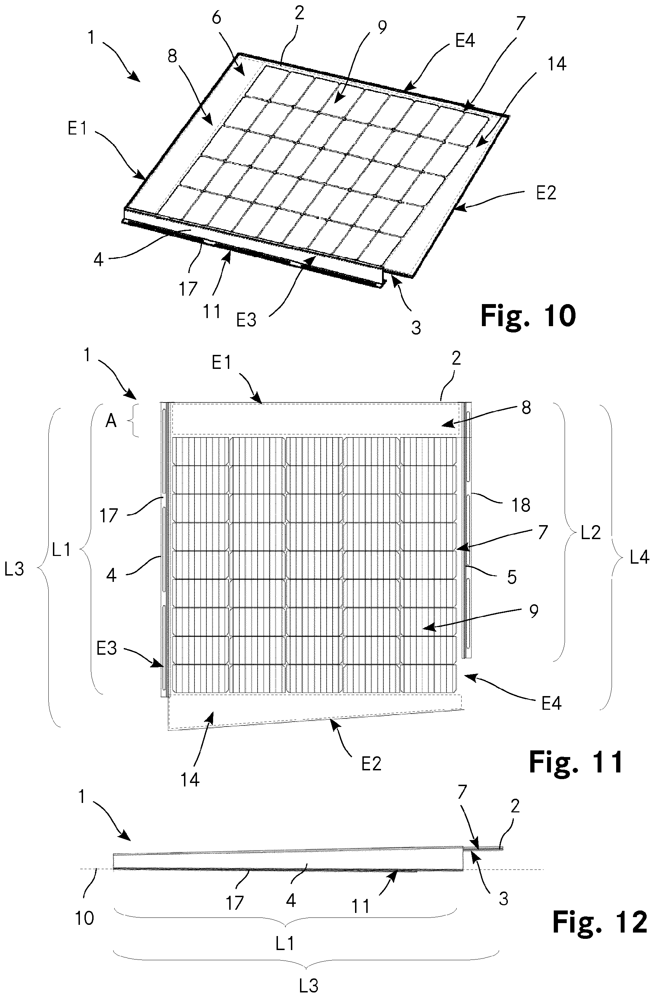

Die Figuren 10, 11 und 12 zeigen eine vierte Ausführungsform eines erfindungsgemässen Montageelements 1. Die vierte Ausführungsform ist grundsätzlich gleich aufgebaut und konfiguriert, wie die dritte Ausführungsform gemäss den Figuren 7 bis 9. Hierbei ist die Fig. 10 eine perspektivische Ansicht, die Fig. 11 eine Draufsicht und die Fig. 12 eine Seitenansicht der vierten Ausführungsform.

Im Unterschied zur dritten Ausführungsform weist das erste längliche Stützelement 4 eine grössere Länge L1 auf, als die Länge L2 des zweiten länglichen Stützelements 5. Wiederum erstrecken sich die länglichen Stützelemente 4, 5 von der ersten Seitenkante E1 aus in Richtung der zweiten Seitenkante E2, die der ersten Seitenkante E1 gegenüberliegt, entlang der dritten Seitenkante E3 bzw. der vierten Seitenkante E4. Ferner weist die zweite Seitenkante E2 relativ zur dritten Seitenkante E3 wie auch zur vierten Seitenkante E3 einen kleineren Winkel auf, als bei der dritten Ausführungsform gemäss den Figuren 7 bis 9.

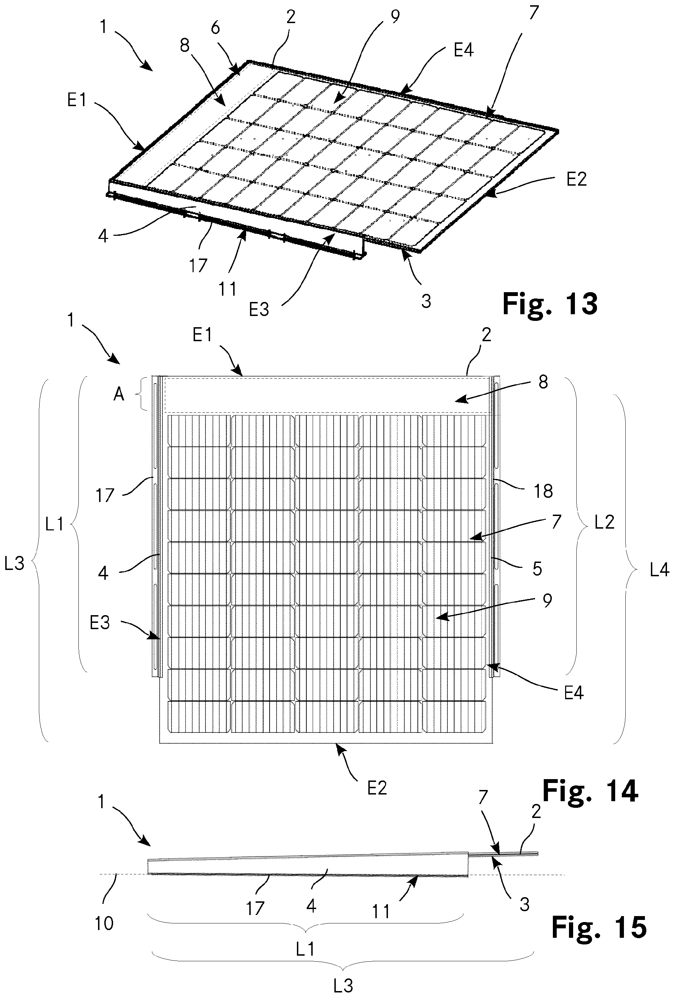

Die Figuren 13, 14 und 15 zeigen eine fünfte Ausführungsform eines erfindungsgemässen Montageelements 1. Die fünfte Ausführungsform ist grundsätzlich gleich aufgebaut und konfiguriert, wie die dritte Ausführungsform gemäss den Figuren 7 bis 9 bzw. der vierten Ausführungsform gemäss den Figuren 10 bis 12. Hierbei ist die Fig. 13 eine perspektivische Ansicht, die Fig. 12 eine Draufsicht und die Fig. 13 eine Seitenansicht der fünften Ausführungsform.

Im Unterschied zur dritten und vierten Ausführungsform ist die Grundplatte 2 bei der fünften Ausführungsform rechteckig geformt und verfügt auf der zweiten Hauptfläche 6 lediglich über den ersten Bereich 7 und über den zweiten Bereich 8, nicht jedoch über einen dritten Bereich 14. Der erste Bereich 7 erstreckt sich bei der gezeigten Ausführungsform im Wesentlichen bis fast an die zweite Seitenkante E2, die dritte Seitenkante E3 und die vierte Seitenkante E4. Die Längen L3, L4 der dritte Seitenkante E3 bzw. der vierten Seitenkante E4 sind gleich gross, ebenso die Längen L1, L2 des ersten Stützelements 4 bzw. des zweiten Stützelements 5.

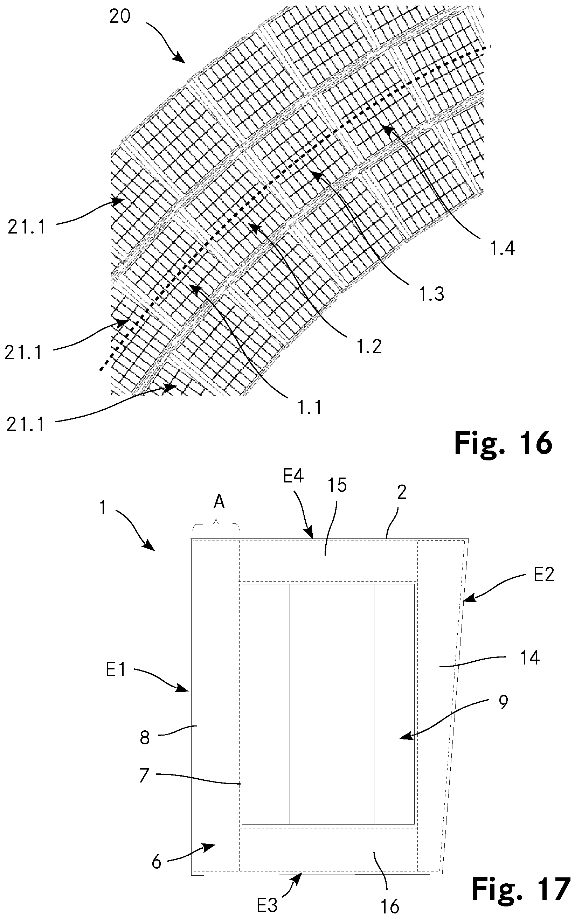

Die Fig. 16 zeigt eine schematische Draufsicht einer Ausführungsform einer erfindungsgemässen Anordnung 20 mit einer Mehrzahl an Montageelementen 1.1, 1.2, 1.3, 1.4. Die Montageelemente 1.1, 1.2, 1.3, 1.4 sind bei der gezeigten Ausführungsform in drei Reihen 21.1, 21.2, 21.3 angeordnet, welche nebeneinander liegen. Innerhalb einer jeden Reihe 21.1, 21.2, 21.3 ist jedes der Montageelemente 1.1, 1.2, 1.3, 1.4 relativ zum nächstfolgenden Montageelement 1.1, 1.2, 1.3, 1.4 um einen Winkel verdreht angeordnet. Dadurch verläuft jede Reihe 21.1, 21.2, 21.3 in einem Bogen, was durch die gestrichelte Linie dargestellt ist. Dadurch, dass jeweils der zweite Bereich 8 jedes der Montageelemente 1.1, 1.2, 1.3, 1.4 durch ein benachbartes Montageelement 1.1, 1.2, 1.3, 1.4 überdeckt wird, ergibt sich trotz der Krümmung eine im Wesentlichen geschlossene und somit optisch ansprechende Fläche.

Die Fig. 17 zeigt schematisch eine Draufsicht auf eine sechste Ausführungsform eines erfindungsgemässen Montageelements 1. Bei dieser Ausführungsform ist der erste Bereich 7 auf der zweiten Hauptfläche jeweils zu jeder der Seitenkanten E1, E2, E3, E4 beabstandet, wodurch die zweite Hauptfläche 6 nebst dem ersten Bereich 7 und dem zweiten Bereich 8 auch einen dritten Bereich 14, einen vierten Bereich 15 und einen fünften Bereich 16 aufweist, welche jeweils frei von Solarzellen sind.

## Patentansprüche

1. Montageelement für eine Photovoltaikanlage umfassend eine viereckige Grundplatte sowie mindestens zwei Stützelemente, welche sich von einer ersten Hauptfläche der Grundplatte weg erstrecken, wobei die freien Enden der mindestens zwei Stützelemente relativ zueinander parallel verlaufen und eine erste Ebene aufspannen, **dadurch gekennzeichnet, dass** die mindestens zwei Stützelemente derart geformt und dimensioniert sind, dass die erste Hauptfläche der Grundplatte einen Neigungswinkel von 0.1° bis 45° relativ zur ersten Ebene aufweist, wobei die viereckige Grundplatte auf einer zweiten Hauptfläche, welche der ersten Hauptfläche gegenüberliegt, einen ersten Bereich aufweist, auf welchem mindestens eine Solarzelle, vorzugsweise eine Mehrzahl an Solarzellen, angeordnet ist, wobei der erste Bereich von einer ersten Seitenkante der Grundplatte beabstandet ist und die zweite Hauptfläche zwischen dem ersten Bereich und der ersten Seitenkante einen zweiten Bereich aufweist, auf welchem keine Solarzellen angeordnet sind, wobei die erste Seitenkante diejenige Seitenkante der viereckigen Grundplatte ist, welche den kleinsten Abstand relativ zur ersten Ebene aufweist.

2. Montageelement nach Anspruch 1, **dadurch gekennzeichnet, dass** das Montageelement über mindestens zwei längliche Stützelemente verfügt, welche parallel relativ zueinander auf der ersten Hauptfläche angeordnet sind und sich parallel relativ zu mindestens einer von der ersten Seitenkante unterschiedlichen Seitenkante der Grundplatte erstrecken.

3. Montageelement nach Anspruch 2, **dadurch gekennzeichnet, dass** die mindestens zwei länglichen Stützelemente eine Länge aufweisen, welche kleiner ist als die Länge der mindestens einen Seitenkante, relativ zu welcher sich die mindestens zwei länglichen Stützelemente parallel erstrecken.

4. Montageelement nach einem der Ansprüche 2 oder 3, **dadurch gekennzeichnet, dass** ein Abstand zwischen der ersten Hauptfläche sowie dem freien Ende der mindestens zwei länglichen Stützelementen bei einem ersten der mindestens zwei Stützelemente kleiner ist als bei einem zu diesem ersten Stützelement benachbarten zweiten Stützelement.

5. Montageelement nach einem der Ansprüche 2 oder 3, **dadurch gekennzeichnet, dass** die zwei Stützelemente in der Form von gleichwinkligen Trapezen vorliegen, welche parallel zu einer Seitenkante ausgerichtet sind, die zur ersten Seitenkante benachbart ist.

6. Montagelement nach einem der Ansprüche 1 bis 5, **dadurch gekennzeichnet, dass** die erste Seitenkante relativ zu ihren zwei benachbarten Seitenkanten jeweils in einem zu einem rechten Winkel unterschiedlichen Winkel angeordnet ist.

7. Montageelement nach Anspruch 6, **dadurch gekennzeichnet, dass** die viereckige Grundplatte die Form eines Trapezes, insbesondere eines rechtwinkligen Trapezes oder eines gleichschenkligen Trapezes aufweist.

8. Montageelement nach einem der Ansprüche 1 bis 5, **dadurch gekennzeichnet, dass** die viereckige Grundplatte die Form eines Quadrates, eines Rechteckes, eines Parallelogramms oder eines Rhombus aufweist.

9. Anordnung aus einer Mehrzahl von Montageelementen gemäss einem der Ansprüche 1 bis 8, **dadurch gekennzeichnet, dass** mindestens ein erstes der Montagelemente derart neben mindestens einem zweiten Montagelement angeordnet ist, dass die viereckige Grundfläche des mindestens einen zweiten Montageelements den ersten Bereich des mindestens einen ersten Montageelements zumindest teilweise, vorzugsweise jedoch vollständig, überdeckt, wobei die ersten Ebenen des mindestens einen ersten Montageelements sowie des mindestens einen zweiten Montageelements, vorzugsweise beide, in einer zweiten Ebene angeordnet sind.

10. Anordnung nach Anspruch 9, **dadurch gekennzeichnet, dass** das mindestens eine erste Montageelement relativ zum mindestens einen zweiten Montageelement um einen Winkel, insbesondere von 1° bis 45°, gedreht angeordnet ist.

11. Anordnung gemäss einem der Ansprüche 9 oder 10, **dadurch gekennzeichnet, dass** im Überdeckungsbereich zwischen der ersten Hauptfläche des mindestens einen zweiten Montageelements und der zweiten Hauptfläche des mindestens einen ersten Montageelements mindestens ein Dichtungselement, insbesondere ein Quetschdichtungselement, angeordnet ist.

12. Anordnung gemäss einem der Ansprüche 9 bis 11, **dadurch gekennzeichnet, dass** die Anordnung mindestens ein blindes Montageelement umfasst, bei welchem im ersten Bereich keine Solarzelle angeordnet ist.

13. Gebäudefläche, insbesondere Dach oder Fassadenelement, mit mindestens einer auf der Gebäudefläche angeordneten Anordnung nach einem der Ansprüche 9 bis 12.
